Europäisches Patentamt

European Patent Office

Office européen des brevets

(19)

(11) Publication number: **0 034 776**
**B1**

(12) **EUROPEAN PATENT SPECIFICATION**

(45) Date of publication of patent specification: **01.02.84**

(51) Int. Cl.³: **H 04 Q 11/04, H 04 J 3/14**

(21) Application number: **81101030.5**

(22) Date of filing: **16.02.81**

(54) Diagnostic circuit for PCM connection networks.

(30) Priority: **20.02.80 IT 6725980**

(43) Date of publication of application:
**02.09.81 Bulletin 81/35**

(45) Publication of the grant of the patent:
**01.02.84 Bulletin 84/5**

(84) Designated Contracting States:
**BE CH DE FR GB LI NL SE**

(56) References cited:
**DE - A - 2 455 235**
**GB - A - 1 470 702**
**GB - A - 1 523 653**
**GB - A - 2 005 962**
**US - A - 4 059 729**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Belforte, Piero**
**Via Fabbriche, 7**
**Torino (IT)**
Inventor: **Bortignon, Renzo**
**Via Ciriè, 63**
**Borgaro Torinese Torino (IT)**

(74) Representative: **Riederer Freiherr von Paar zu Schönau, Anton et al,**
**Freyung 615 Postfach 2664**
**D-8300 Landshut (DE)**

EP 0 034 776 B1

Courier Press, Leamington Spa, England.

Diagnostic circuit for PCM connection networks

The invention relates to a diagnostic circuit arrangement as stated in the prior art portion of claim 1 and is particularly concerned with such diagnostic circuit arrangement for a PCM connection network.

A diagnostic circuit arrangement as defined in the prior art portion of claim 1 has become known from US—A 4 059 729. Therein, an extracting circuit serves for picking up the data transferred over a particular channel for monitoring them, or for testing a particular connection by blocking the data transfer therethrough and sending first a loopback code and then a test signal which is looped back and can be checked for possible modification. To this purpose, the extracting circuit is connected to a particular control device.

To ascertain the good operation of a connection network it is desirable to compare a picked up incoming signal with the picked up switched outgoing signal so as to check the connection continuity and switching correctness. However, to this end, the control of the extracting circuit has to consider the switching operation with reference to the difference in the channel, frame and group before and after switching and the test start and reset commands with reference to the switching time. The respective data are available in the network control device but are not provided for in the prior art arrangement wherein the control device is not that of the network and which does not allow the comparison of the bits of an incoming channel and of the corresponding switched channel. Moreover, the prior art arrangement containing a lot of analog circuitry does not allow integration which however seems almost necessary for the use in larger networks and exchanges.

In case of a PCM network, the check will be effected by picking up the 8-bit word relating to a channel of an incoming group, whose identity is communicated by the network control device, and by comparing said 8-bit word with the one relating to the switched channel, picked up from the network output after the transit time (frame delay), it too communicated by the control device.

As the present trend is towards the realization of distributed network structures, that make use of integrated circuits specialized for the various functions and of microprocessors as control devices associated to each network element, it is convenient to distribute among the various network elements also the diagnostic devices; besides such devices ought to be designed according to schemes suitable for the integration (and then allowing an easy arrangement for instance on printed circuit boards, together with the element of connection network and the control devices), and for direct dialogue with the network control microprocessor.

The aim of the invention is to provide a particular diagnostic circuit arrangement fully useable for diagnosis purpose and comprising extracting circuits easy to integrate which can directly dialogue with the network control microprocessor. This aim is attained by the invention characterized in claim 1.

By this particular arrangement, the circuit arrangement allows the comparison of the bits of an incoming channel and of the corresponding switched channel of a PCM connection network, e.g. a switching stage. Respective ones of the extracting circuits are to be located upstream and downstream the PCM connection network, pick up the content of a channel before and after switching and send it to the control device of the network. There is no need for either of the two extracting circuits to insert special patterns in the channel, as the data messages sent by the subscribers are used for the diagnosis. In this way the normal operation of the data communication system is undisturbed even for the channel being checked. The extracting circuits being inserted between the lines and the network control device allows the extracting circuits to be synchronized with the time base of the PCM system, receiving therefrom the basic clock signals without need of detecting the framing signals in the data stream. The extracting circuit can easily be implemented in a way that allows integration.

The foregoing and other characteristics of the invention can in more detail be derived from the subclaims and from the following description of a preferred exemplary embodiment thereof depicted in the annexed drawing in which:—

— Fig. 1 shows the inventive arrangement including the connection of extracting circuits to a PCM connection network;

— Fig. 2 is a circuit diagram of the extracting circuits.

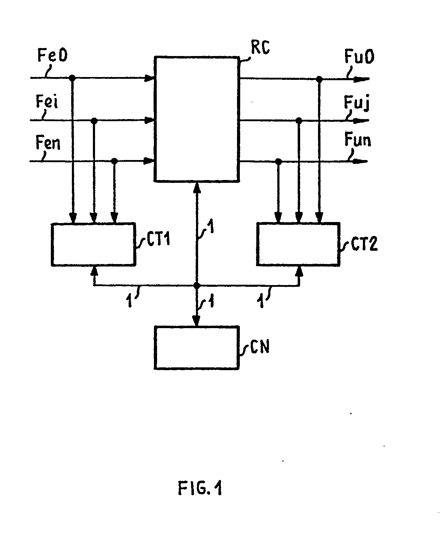

Fig. 1 shows an element RC of a digital connection network equipped with its control device CN and connected to a number of incoming PCM groups FeO...Fei...Fen and the same number of outgoing PCM groups FuO...Fuj...Fun.

RC is preferably an element of a connection network with a distributed structure, consisting of connection elements realized as integrated circuits, and the control device CN, advantageously consisting of a microprocessor, is the element of the control system of the whole network associated with that particular module for switching control and diagnosis.

For the purposes of the present invention RC may indifferently be either a part of a network or a whole network.

Two circuits CT1, CT2 are connected on the one side to incoming groups Fe and outgoing groups Fu respectively and on the other side to bus 1 of the control device; these circuits pick up the 8-bit words relating to a channel of an incoming group and to the corresponding switched outgoing channel and send these words to the control device that is to compare them for diagnosis purposes. For these operations circuits CT will receive from device CN a number of messages, preferably consisting of 8-bit words, containing the identity of the channel and of the group (incoming or outgoing) concerned in the pick up, the possible frame delay (that is the time necessary to the switching) and the commands relating to the bit transfer to the control device (test start) and to the reset. More particularly, assuming for simplicity of description that there are 16 incoming and/or outgoing groups of 32 channels each, the structure of the messages can be the following:

a) channel identity: $c_1$ $c_2$ $c_3$ $c_4$ $c_5$ X X 0, where $c_1...c_5$ are the bits identifying the channel number, and the letter X indicates a "don't care" condition for the logic value of the respective bit.

b) group identity and frame delay entity:

$$f_1 \ f_2 \ f_3 \ f_4 \ r_1 \ r_2 \ r_3 \ 1$$

where $f_1...f_4$ are the 4 bits encoding the group identity and $r_1$, $r_2$ $r_3$ are the bits encoding the delay (it is then supposed that network RC does not introduce a delay greater than 7 frames, but this is not very limitative)

c) test start: X X X X X X X 1

d) reset: X X X X X X X 0

During the various operating steps, circuits CT receive also suitable commands causing the loading of a message coming from control device CN (write) or the transfer to CN of the bits (read) as well as one bit indicating whether the message contains commands (test start, reset) or data (identity of the channel or of the group, frame delay).

By way of example this bit is supposed to be 0 for data messages (words a, b) and 1 for command messages. If the connection network comprises a plurality of elements RC, each equipped with its own circuits CT, the control device will also send enabling signals for the two circuits CT associated with the element under test.

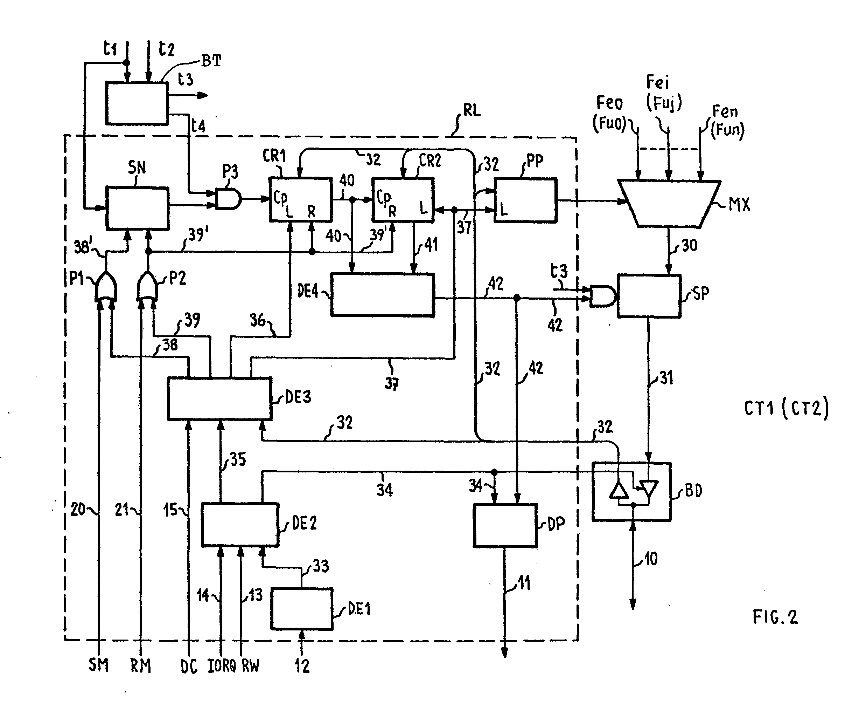

Fig. 2 shows that circuits CT basically comprise:

— a selector MX with a plurality of inputs and one output, followed by a series-to-parallel converter SP, for the transfer to the control device of the bits of the channel under test;

— a data transceiver BD, by which the circuit is connected to a data bus 10 to receive the messages and transmit the signals picked up;

— a logic network RL that decodes the messages and the control signals supplied by the control device and controls the pick up and the transfer of the 8-bit words;

— a local time base BT, timing the operations of the various devices of CT.

Local time base BT receives from a general time base of the switching system signals $t_1$ corresponding to frame timing (that is signals with period of 125 $\mu$S, according to the hypotheses made for the number of channels) and signals $t_2$ corresponding to half the bit time (that is, signals with period of 250 ns), and emits signals $t_3$ corresponding to the bit time (500 ns) and signals $t_4$ corresponding to channel time (4 $\mu$s).

Slaving the local time base BT to the general time base of the system ensures the synchronization between the two circuits CT1 and CT2 associated with the incoming and outgoing groups of network RC, that is it ensures that the pick up of the bits of the two channels involved in the test takes place exactly in the two corresponding frames.

More particularly, the presence at the input of local time base BT of the signal at 250 ns synchronizes the operating cycle of the pick up circuit with that of the processing unit of the control device.

The inputs of selector MX are each connected to one of the incoming groups FeO...Fei...Fen or outgoing groups FuO...Fui...Fun, from which the eight bits of the channel are picked up in series; output 30 is connected to the input of converter SP whose eight output wires 31 are in turn connected to transceiver BD. The positioning of the selector is controlled by the bits that identify the group interested in the test; these bits are present on a number of wires of connection 32 outgoing from BD, and are sent to the control input of MX through a parallel-to-parallel register PP belonging to logic network RL.

There, a first decoder DE1 receives from CN (through wires 12) and decodes signals that identify which element CT is interested in a test. These signals, which will not be described here in detail because they are not of interest for the invention, will have such a configuration as to allow this decoding to take place completely or mostly in circuit CT and to reduce to a minimum or even eliminate decoding by the control device.

In this way the circuit is easy to adapt to variations or extensions of network RC.

Output 33 of DE1 is connected to an input of a second decoder DE2. When it is enabled by said output and by the presence of a request for operation (signal IORQ supplied by CN via a wire 14). DE2 decodes signals RW indicating whether circuit CT is to load a message coming from control device CN via data bus 10 and circuit BD (write) or must transfer the 8-bit word to CN (read). These signals are supplied by CN via wire or connection 13.

A first output 34 of DE2, energized in case of reading, enables circuit BD to transmission towards CN.

A second output 35 of DE2, energized in case of writing, enables a third decoder DE3 that receives from BD, via a wire of connection 32, the last bit of each message arriving from CN; besides, decoder DE3 directly receives from CN, via a wire 15, the bit DC indicating whether the message contains data or commands. Depending on whether on the message sent by CN contains the channel identity, the group identity and the frame delay, the test start of the reset, there are energized respectively: output 36 connected to the "load" of a presettable counter CR1; output 37 connected to the "load" of a second counter CR2 and of register PP; output 38 connected to a circuit SN synchronizing the frame beginning; output 39 connected to the reset of CR1, CR2, SN. Outputs 38, 39 are connected to SN or respectively to SN, CR1, CR2 through OR gates P1, P2 that let through on wires 38', 39' either the signals supplied by DE3 or signals of manual test start (SM) or manual reset (RM) present on wires 20, 21.

Counter CR1 has the data input connected to the wires that in connection 32 convey the bits identifying the channel involved in the test; said bits are loaded when the output 36 of DE3 is energized. The clock input of CR1 is connected, through AND gate P3, to that output of BT that carries signals $t_4$ corresponding to channel timing. The transfer of the timing signals to CR1 through P3 is enabled by SN, when it receives the signal of beginning of frame ($t_1$). The output 40 of CR1, which is activated when CR1 attains its terminal count is connected to a further decoder DE4 and to the clock input of counter CR2. Counter CR2 has its data input connected to the wires that in connection 32 convey the bits of the frame delay; said bits will be loaded upon the energization of output 37 of DE3. The attainment of the terminal count of CR2 is signalled through wire 41 to decoder DE4 which, upon receiving at the same time a signal from CR1 and CR2, enables the series-to-parallel converter SP to load the signals supplied by MX at the rate of signals $t_3$.

Output 42 of DE4 is connected also to a "data ready" circuit DP, that communicates to the control device CN the availability of the data to be transmitted. Circuit DP has a second input connected to output 34 of DE2, by which it is disabled when the read command arrives from CN.

It is to be noted that in the practical embodiment of the circuit as an integrated circuit, the whole of CR1, CR2 can be realized as a single presettable counter, in which a 8-bit coded value is loaded, where the five least significant bits identify the channel and the other three identify the frame to which the channel belongs.

The operation of the described circuit is as follows: when a test is to be effected the control device first sends the information about the identity of the network element involved (via wire 12) and the request for an input-output operation (signal IORQ on wire 14). Decoder DE1, recognizing that the test concerns the element CT with which it is associated, enables through wire 33 decoder DE2 having at the input the signal RW present on wire 13 and the request for operation (wire 14). The signal on wire 13 will denote that a write operation is to be effected, i.e. that circuit CT is to load the messages present on bus 10. Output 35 of DE2 then enables DE3 to decode the last bit of the arriving messages and bit DC (present on wire 15). The first message will generally be the reset message. Under the hypotheses made, bit DC will have value 1 (command) and the last bit of the message will also be 1; output 39 of DE3 will be excited thus resetting the counters and disabling SN. The subsequent message will contain the channel identity: it is a data message, then bit DC will be 0. In addition the last bit of this message is 0. Consequently output 36 of DE3 will be excited thus enabling counter CR1 to load the value corresponding to the channel involved. Supposing that the test concerns the m-th channel of incoming group Fei, value 32-m will be set in counter CR1.

Subsequently, control device CN communicates to the circuit the identity of the group and the frame delay; the last bit of this message is 1 while bit DC is still 0; as a consequence output 37 of DE3 is energized and counter CR2 and register PP are enabled to load the entity of frame delay and the group identity, respectively.

An input group is examined, therefore the frame delay will be 0; then CR2 remains stopped on its terminal count (7 according to the hypothesis made at the beginning). In addition selector MX will connect to output 30 input Fei connected to the homonymous group; circuit SP is not yet enabled, then the bits of the chosen channel cannot yet be transferred to CN.

The last message relates to the "test-start": bit DC passes to a 1 (command) and the last bit of the message is also 1: output 38 of DE3 is excited and it enables SN through P1 and wire 38': when the "beginning of frame" information arrives from the general time base of the system, P3 is enabled and CR1 begins to count at the rate of the channel timing.

The terminal count of CR1 is sent through wire 40 to DE4.

Frame delay has been supposed to be zero and consequently the terminal count of CR2 is already present on wire 41. Under these conditions DE4 enables converter SP to parallelize the bits present on wire 30, and when the loading is ended, it communicates to CN, through DP, the availability of the bits picked up. Upon receiving the "data ready" from CT1 and CT2 the control device will send the read command: DE2 disables DP and enables transceiver BD, so that the bits are transferred onto bus 10.

What has been described for circuit CT1 connected to incoming groups also applies to circuit CT2; the only difference is that a value different from zero is generally set in counter CR2 and therefore decoder DE4 will be enabled after a number of cycles of CR1 and of steps of CR2.

The messages for CT2 will be sent after those concerning CT1, except the test start, which must be simultaneously sent to both circuits.

It is to be noted that while the test is in progress (that is in the time elapsing between the sending of test start and the reception of the data ready from CT2) the control device is available for other operations.

The above description relates to the normal circuit operation, and then all the data and commands are supposed to be sent by the network control device.

In certain cases, more particularly during the testing phase, it can be useful to test the circuit without any intervention of the control device.

To this aim manual reset and test start are utilized; if first the reset command and then the test start command are sent, the circuit will effect the test on channel 0 of group 0, with frame delay zero. The modalites are those described with the exception that the three decoders DE1, DE2, DE3 are not involved in the operation.

From the previous description the feasibility of the described circuit as an integrated circuit and the ease of dialogue with microprocessor can be deduced.

In fact the devices represented as blocks in Fig. 2 will comprise as a whole, in the practical embodiment, about one thousand active components, and the maximum frequency of operation required is 4 MHz (signal $t_2$): both these characteristics are easy to obtain with the present technology of integrated circuit production.

As to the ease of dialogue with microprocessor, the circuit presents an 8-wire data bus 10 that can be connected to any commercially available 8-bit microprocessor besides the operation commands (more particularly signals DC, RW and IORQ that denote data/commands, read/write and input-output request) are provided by all known microprocessors.

**Claims**

1. Diagnostic circuit arrangement for the diagnosis of a multiplex time division network (RC) controlled by a network control device and switching data messages which are arranged in channels and frames, the diagnostic circuit arrangement comprising an extracting circuit (CT1, CT2) connected to data lines (Fe, Fu) and being able to pick up from the data lines and to transfer to a control device (CN) the bits relating to one of the channels chosen out of the plurality of incoming or outgoing channels on the lines, the extracting circuit (CT1, CT2) receiving from the control device in message form the data relative to the identities of the channel, frame and line involved in the test, a test start command and a reset command and receiving also enable and control signals necessary for its operation, the extracting circuit (CT1, CT2) comprising:

— a selector arrangement (MX) having a plurality of inputs each connected to one of the data lines (Fe, Fu) and a single output (30) on which the bits of the chosen channel are presented in series;
— a time base (BT) slaved to the timing of the network (RC) by means of a signal $(t_1)$ corresponding to the frame time, and generating the synchronous control signals;
— and a logic network (RL) decoding the messages and the signals sent by the control device (CN) and controlling the pick up and transfer operations, the logic network (RL) comprising decoding means for decoding the signals received from the control device, and a synchronizing device (SN) that is enabled by the signal $(t_1)$ corresponding to the frame timing to let through a test start signal issued by the control device,

characterized in that for the diagnosis of a PCM connection network (RC), one of two extracting circuits (CT1, CT2) is each connected between the lines incoming to or outgoing from the connection network, respectively, and the control device which is the network control device (CN) for transfer of the PCM data signals of the two channels connected to each other by the connection network to the network control device, and that within each of the extracting circuits (CT1, CT2) to the output of the selector arrangement (MX) a series-to-parallel converter (SP) is connected to parallelize the bits and has the output connected to an input of a data transceiver (BD), connected on the one hand to a data bus (10) that carries messages coming from the control device (CN) to the extracting circuit (CT1, CT2) and transfers to the control device the bits picked up, and connected on the other hand to the series-to-parallel converter (SP) and the logic network (RL), and that the logic network (RL) comprises:

— a first decoder (DE1) for enabling the operation of the extracting circuit (CT1, CT2);
— a second decoder (DE2) that decodes the requests for operation and a signal indicating whether the circuit (CT1, CT2) must load a message supplied by the control device or must transfer thereto the bits picked up, said decoder being enabled by the first decoder (DE1) and having a first output (35) that is excited in presence of the signal indicating the arrival of a message and a second output (34) connected to the transceiver (BD) and excited in presence of a bit transfer command;

— a third decoder (DE3) that is enabled by the excitation of the first output (35) of the second decoder (DE2) and recognizes the kind and the contents of the message coming from the control device, on the basis of one bit of each message and of a signal (DC) also sent by the control device and indicating whether the message contains data or commands, said third decoder having two outputs (38, 39) that lead to the synchronizing device and are excited upon the recognition of a test start message or a reset message respectively and a group of further outputs (36, 37) respectively excited upon recognition of a particular data message;

— presettable counting means (CR1, CR2) that load the data about the identity of the channel, the line and the frame when said further outputs (36, 37) of the third decoder (DE3) are excited and that begin to count under the control of said synchronizing device (SN);

— a parallel-to-parallel register (PP) that receives at one input the signals identifying the line (Fe, Fu) involved in the test and presents them to the output as control signals for the positioning of said selector (MX);

— a fourth decoder (DE4) that receives at the input the signals of end-of-counting from said counting means and has an output (42) connected to said series-to-parallel converter (SP) to enable the load and parallelization of the bits picked up in series by the selector arrangement (MX);

— a "data ready" circuit (DP) informing the control device of the bit availability, said circuit being enabled by the fourth decoder (DE4) at the end of the loading of the bits in the converter (SP) and disabled by the excitation of the second output (34) of the second decoder (DE2).

2. Circuit according to claim 1, characterized in that it is realized as an integrated circuit.

3. Circuit according to claim 2, characterized in that it is associated to a network consisting of connection elements realized as integrated circuits.

4. Circuit according to any of claims 1, 2, 3 characterized in that, in case of a connection network made of a plurality of modules controlled by the same control device (CN) and associated each to a pair of extracting circuits (CT1, CT2) for picking up and transferring to the control device the bits of an incoming PCM channel and of the switched channel, respectively, said first decoder (DE1) recognizes the identity of the module concerned in the test and enables the extracting circuits (CT1, CT2) associated therewith.

5. Circuit according to claim 1, characterized in that said two outputs of the third decoder (DE3) are connected to said synchronizing device (SN) by means of logic OR gates (P1, P2) that receive also test start and reset signals from external generators, independent of the control device.

**Patentansprüche**

1. Prüfschaltung für die Prüfung eines multiplexen zeitgeteilten Verbindungsnetzwerks (RC), das von einer Verbindungsnetzwerk-Steuervorrichtung gesteuert wird und Datennachrichten schaltet, die in Kanälen und Rahmen angeordnet sind, wobei die Prüfschaltung eine Extraktionsschaltung (CT1, CT2) die mit Datenleitungen (Fe, Fu) verbunden ist und von diesen diejenigen Bits abgreift und zu einer Steuervorrichtung (CN) überträgt, die sich auf einen der aus der Vielzahl ankommender und angehender Kanäle auf den Leitungen ausgewählten Kanal beziehen, wobei die Extraktionsschaltung (CT1, CT2) von der Steuervorrichtung in Nachrichtenform die Daten über die Identität des Kanals, des Rahmens und der Leitung, die in den Test einbezogen sind, einen Teststartbefehl und einen Rückstellbefehl empfängt und außerdem für ihren Betrieb erforderliche Einschaltund Steuersignale empfängt, und wobei die Extraktionsschaltung (CT1, CT2) folgende Einzelschaltungen umfaßt:

— einen Selektor (MX) mit einer Mehrzahl von Eingängen, von denen jeder mit einer der Datenleitungen (Fe, Fu) verbunden ist, und mit einem einzigen Ausgang (30), an dem die Bits des gewählten Kanals in Serie auftreten;

— einen Zeitgeber (BT), der an den Zeittakt des Verbindungsnetzwerks (RC) mit Hilfe eines der Rahmen-Zeitsteuerung entsprechenden Signals $(t_1)$ gekettet ist und synchrone Steuersignale erzeugt;

— eine Logikschaltung (RL), die die von der Steuervorrichtung (CN) gesendeten Nachrichten und Signale decodiert und die Abgrief- und Übertragungsoperationen steuert, wobei diese Logikschaltung (RL) Decodiereinrichtungen zum Decodieren der von der Steuervorrichtung empfangenen Signale und eine Synchronisiervorrichtung (SN), die von dem der Rahmenzeitsteuerung entsprechenden Signal $(t_1)$ zum Durchlassen eines von der Steuervorrichtung abgegebenen Teststartsignals angesteuert wird, umfaßt,

dadurch gekennzeichnet, daß für die Prüfung eines PCM-Verbindungsnetzwerks (RC) jeweils eine von zwei Extraktionsschaltungen (CT1, CT2) zwischen die beim Verbindungsnetzwerk ankommenden oder von ihm abgehenden Leitungen einerseits und die Steuervorrichtung andererseits, die die Verbindungsnetzwerk-Steuervorrichtung (CN) ist, für den Transfer der PCM-Datensignale der beiden miteinander durch das Verbindungsnetzwerk verbundenen Kanäle zur Verbindungsnetzerk-Steuervorrichtung geschaltet ist, und daß innerhalb jeder der Extraktionsschaltungen (CT1, CT2) mit dem Ausgang des Selektors (MX) ein Serien/Parallel-Umsetzer (SP) zum Parallelisieren der Bits verbunden ist, der ausgangsseitig mit dem Eingang eines Daten-Senderempfängers (BD) verbunden ist, der einerseits mit einer Daten-Sammelleitung (10) verbunden ist, die von der Steuervorrichtung (CN) kommende Nachrichten zur Extraktionsschaltung (CT1, CT2) führt und zur Steuervorrichtung die abgegriffenen Bits transferiert, und andererseits mit dem Serien/Parallel-Umsetzer (SP) und der Logikschaltung (RL) verbunden ist, und daß die Logikschaltung (RL) folgende Einzelschaltungen umfaßt:

— einen ersten Decoder (DE1) zum Einschalten des Betriebs der Extraktionsschaltung (CT1, CT2);

— einen zweiten Decoder (DE2), der die Anforderungen für eine Operation und ein Signal, das anzeigt, ob die Extraktionsschaltung (CT1, CT2) eine von der Steuervorrichtung gelieferte Nachricht laden muß oder zu ihr die abgegriffenen Bits übertragen muß, decodiert, wobei dieser Decoder vom ersten Decoder (DE1) eingeschaltet wird und eine erste Ausgangsleitung (35), die bei Vorliegen des Signals, das das Eintreffen einer Nachricht anzeigt, erregt wird, wobei eine zweite Ausgangsleitung (34), die mit dem Senderempfänger (BD) verbunden ist und bei Anwesenheit eines Bitweitergabebefehls erregt wird, aufweist;

— einen dritten Decoder (DE3), der durch die Erregung der ersten Ausgangsleitung (35) des zweiten Decoders (DE2) eingeschaltet wird und Art und Inhalt der von der Steuervorrichtung kommenden Nachricht auf der Grundlage eines Bits jeder Nachricht und eines ebenfalls von der Steuervorrichtung gesendeten Signals (DC), das anzeigt, ob die Nachricht Daten oder Befehle enthält, erkennt, wobei dieser dritte Decoder zwei Ausgangsleitungen (38, 39), die zur Synchronisiervorrichtung (SN) führen und bei Erkennung einer Testbeginn-Nachricht bzw. einer Rückstellnachricht erregt, werden, sowie eine Gruppe weiterer Ausgangsleitungen (36, 37), die bei Erkennung einer jeweiligen speziellen Datennachricht erregt werden, aufweist;

— voreinstellbare Zähleinrichtungen (CR1, CR2), die die Daten über die Identität des Kanals, der Leitung und des Rahmens laden, wenn die weiteren Ausgangsleitungen (36, 37) des dritten Decoders (DE3) erregt sind, und die unter der Steuerung durch die Synchronisiervorrichtung (SN) zu sählen beginnen;

— ein Parallel-Parallel-Register (PP), as an einem Eingang die die Leitung (Fe, Fu), die in den Test einbezogen ist, identifizierenden Signale empfängt und sie ausgangsseitig als Steuersignal für die Schaltstellung des Selektors (MX) abgibt;

— einen vierten Decoder (DE4), der eingangsseitig die Signale des Zählendes der Zähleinrichtungen empfängt und einen mit dem Serien/Parallel-Umsetzer (SP) verbundenen Ausgang (42) aufweist, über den das Laden und die Parallelisierung der in Serie durch den Selektor (MX) aufgenommenen Bits angesteuert wird;

— eine "Daten bereit"-Schaltung (DP), die die Steuervorrichtung darüber informiert, daß die Bits zur Verfügung stehen, und die vom vierten Decoder (DE4) am Ende des Ladens der Bits in dem Umsetzer (SP) in Gang gesetzt und durch die Erregung der zweiten Ausgangsleitung (34) des zweiten Decoders (DE2) abgeschaltet wird.

2. Schaltung nach Anspruch 1, dadurch gekennzeichnet, daß sie als integrierter Schaltkreis dargestellt ist.

3. Schaltung nach Anspruch 2, dadurch gekenzeichnet, daß sie einem Verbindungsnetzwerk zugeordnet ist, dessen Verbindungselemente als integrierte Schaltkreis dargestellt sind.

4. Schaltung nach einem der Ansprüche 1, 2, 3, dadurch gekennzeichnet, daß im Fall eines Verbindungsnetzwerks, das aus einer Mehrzahl von Moduln hergestellt ist, die von der selben Steuervorrichtung (CN) gesteuert sind und jeweils zweien der Extraktionsschaltungen (CT1, CT2) zum Abgreifen der Bits eines eingehenden (PCM-Kanals bzw, des geschalteten Kanals und zu deren Weitergabe zur Steuervorrichtung zugeordnet sind, der erste Decoder (DE1) die Identität des am Test beteiligten Moduls erkennt und die ihm zugeordnete Extraktionsschaltung (CT1, CT2) in Gang setzt.

5. Schaltung nach Anspruch 1, dadurch gekennzeichnet, daß die beiden Ausgangsleitungen des dritten Decoders (DE3) an die Synchronisiervorrichtung (SN) über ODER-Verknüpfungsglieder (P1, P2) angeschlossen sind, die außerdem Testbeginn-und Rückstellsignal von externen, von der Steuervorrichtung unabhängigen Generatoren empfangen.

**Revendications**

1. Circuit de diagnostic pour un réseau multiplex a répartition temporelle (RC) contrôlé par un organe de commande du réseau et commutant des messages de données organisés en canaux et trames, le circuit de diagnostic comprenant un circuit de prélèvement (CT1, CT2) connecté à des lignes de données (Fe, Fu), et capable de prélever et transférer à un organe de commande (CN) les bits relatifs à un des canaxu choisi parmi la pluralité de canaux d'entrée ou de sortie sur les lignes, le circuit de prélèvement (CT1, CT2) recevant de l'organe de commande, sous forme de message, les données relatives à l'identité du canal, de la trame et de la ligne impliqués dans le test, une commande de commencement du test et un ordre de remise à zéro ainsi que des signaux de validation et commande nécessaires au fonctionnement du circuit, le circuit de prélèvement (CT1, CT2) comportant:

— un sélecteur (MX) ayant une pluralité d'entrées dont chacune est connectée à une desdites lignes (Fe, Fu) et une sortie unique (30) où les bits relatifs au canal choisi sont présents en série;

— une base de temps (BT) qui est asservie au rythme du réseau de connexion (RC) à l'aide d'un signal $(t_1)$ correspondant au rythme de trame et engendre les signaux de commande synchrones;

— et un réseau logique (RL) qui décode les message et les signaux envoyés par l'organe de commande (CN) et commande les opérations de prélèvement et transfert, le réseau logique (RL) comprenant des moyens pour le décodage des signaux reçus de l'organe de commande et un dispositif de synchronisation (SN) qui est validé par le signal $(t_1)$ correspondant au rythme de trame à laisser passer une commande de commencement du test émis par l'organe de commande,

charactérisé en ce que, pour le diagnostic d'un réseau de connexion MIC (RC) chacun des deux circuits de prélèvement (CT1, CT2) est connecté entre les lignes entrant dans le réseau de connexion ou respectivement sortant du réseau de connexion, et l'organe de commande (CN), qui est l'organe de commande (CN) du réseau, pour transférer à l'organe de commande du réseau les signaux de données MIC des deux canaux connectés à travers le réseau de connexion, en ce que dans chacune des circuits de prélèvement (CT1, CT2) un convertisseur série/parallèle (SP) est connecté à la sortie du sélecteur (MX) pour organiser en parallèle lesdits bits, et a la sortie connectée à une entrée d'un récepteur-transmetteur de données (BD), connecté d'une part à un bus de données (10) qui amène au circuit de prélèvement (CT1, CT2) des messages venant de l'organe de commande (CN) et trasfère à ce dernier les bits prélevés, et connecté de l'autre part au convertisseur série-parallèle (SP) et au réseau logique (RL); et en ce que le réseau logique (RL) comprend:

— un premier décodeur (DE1) qui valide le circuit de prélèvement (CT1, CT2) au fonctionnement;

— un deuxième décodeur (DE2) qui décode les requêtes d'opération et un signal qui indique que le circuit (CT1, CT2) doit stocker un message fourni par l'organe de commande (CN) ou doit lui transférer les bits prélevés, ce décodeur étant validé par le premier décodeur (DE1) et ayant une première sortie (35) qui est activée en présence du signal qui indique l'arrivée d'un message, et une seconde sortie (34) connectée au récepteur-émetteur (BD) et activée en présence d'une commande de transfert des bits;

— un troisième décodeur (DE3) qui est validé par l'activation de la première sortie (35) du deuxième décodeur (DE2) et interprète le type et le contenu des messages provenant de l'organe de commande sur la base d'un bit de chaque message et d'un signal (DC) envoyé lui aussi par l'organe de commande et indiquant si le message contient des données ou des commandes, ledit troisième décodeur ayant deux sorties (38, 39) qui sont connéctées au dispositif de synchronisation et sont activées dès la reconnaissance du message de commencement de test ou respectivement de remise à zero, et un groupe d'autres sorties (36, 37) dont chacune est activée d'après la reconnaissance d'un message de données particulier;

— un système de comptage à affichage préalable (CR1, CR2) qui charge les données relatives à l'identité du canal, de la ligne et de la trame lorsque les autres sorties (36, 37) du troisième décodeur (DE3) sont activées et commence à compter d'après la commande dudit circuit de synchronisation (SN);

— un registre parallèle-parallèle (PP) qui reçoit à une entrée les signaux d'identification de la ligne du faisceau (Fe, Fu) intéressée au test et les présente à la sortie comme signaux de commande pour le sélecteur (MX);

— un quatrième décodeur (DE4) qui reçoit à l'entrée les signaux de fin de comptage et comporte une sortie (42) connectee audit convertisseur série-parallèle pour valider l'acquisition et la présentation en parallèle des bits prélevés en série par le sélecteur (MX);

— un circuit de "donnée prête" (DP) pour signaler à l'organe de contrôle la disponibilité des bits, ledit circuit étant validé par le quatrième décodeur (DE4) à la fin du chargement des bits dans le convertisseur (SP) et inhibé par l'activation de la deuxième sortie (34) du deuxième décodeur (DE2).

2. Circuit suivant la revendication 1, caractérisé en ce qu'il est réalisé sous forme d'un circuit intégré.

3. Circuit suivant la revendication 2, caractérisé en ce qu'il est associé à un réseau constituée d'éléments de connexion réalisés sous forme de circuits intégrés.

4. Circuit suivant l'une quelconque des revendications 1, 2, 3, caractérisé en ce que, lorsqu'il s'agit d'un réseau de connexion réalisé à l'aide d'une pluralité de modules contrôlés par le même organe de commande (CN) et associés chacun à deux circuits (CT1, CT2) pour le prélèvement et le transfert à l'organe de commande des bits d'un canal MIC entrant et des bits du canal commuté, respectivement, ledit premier décodeur (DE1) reconnaît l'identité du module intéressé au test et valide les circuits de prélèvement (CT1, CT2) associés à ce module.

5. Circuit suivant la revendication 1, caractérisé en ce que lesdites deux sorties du troisième décodeur (DE3) sont connectées audit dispositif de synchronisation (SN) au moyen de portes logiques OR (P1; P2) qui reçoivent aussi des signaux de commencement du test et de remise à zéro de générateurs extérieurs, indépendants de l'organe de commande.

FIG. 1

1

FIG. 2

CT1 (CT2)